# EUROPEAN PATENT APPLICATION

(11) **EP 4 628 172 A1**
(43) Date of publication of application: **08.10.2025**
(21) Application number: 25167683.9
(22) Date of filing: 01.04.2025
(51) Int. Cl.: A63B 59/42, A63B 59/48, A63B 102/08

(54) **RACKET**

(30) Priority: 05.04.2024 IT 202400007627
(71) Applicant: Automobili Lamborghini S.p.A., 40019 Sant'Agata Bolognese (BO) (IT); Babolat VS SAS, 69009 Lyon (FR)
(72) Inventor: ASTRUC, Pierre-Nicolas, 69009 LYON (FR); CASALE, Francesco Cesare, 40019 SANT'AGATA BOLOGNESE (BOLOGNA) (IT); HACHET, Kevin, 69009 LYON (FR); MARCELLI, Fabio, 40019 SANT'AGATA BOLOGNESE (BOLOGNA) (IT)
(74) Representative: Puggioli, Tommaso

(57) **Abstract**

Described is a racket for ball sports, in particular for padel, pickleball or beach tennis, comprising:
- a first half-shell (10) comprising a first head portion (11) having a first impact wall (12), said first half-shell (10) comprising a first handle portion (13) extending from the first head portion (10) and a first contour wall (14) extending around the first head portion (11),
- a second half-shell (20), coupled to the first half-shell (10), comprising a second head portion (21) having a second impact wall (22), said second half-shell (20) comprising a second handle portion (23) extending from the second head portion (21) and a second contour wall (24) extending around the second head portion (21), the second contour wall (24) being joined to the first contour wall (14),
- a central core (30), made of a first deformable material and positioned between the first and the second impact surfaces (12, 22),
- a peripheral core (40) comprising a contour element (41) positioned around the central core (30), the peripheral core (40) being positioned between the first and second impact surfaces (12, 22) in contact at least with the first and second contour walls (14, 24) and made of a second deformable material.

## Description

This invention relates to a racket for ball sports, in particular for padel, pickleball or beach tennis.

The rackets for padel or beach tennis generally comprise a hollow frame made of composite material, provided with a head which forms the contact zone of the racket, a handle and a contour wall for peripherally delimiting the contact zone.

There are prior art rackets wherein there is a foam inside the frame, preferably with holes for the passage of the air, which occupies the entire cavity of the frame of the racket such as, for example, shown in the prior art document EP3197569 by Decathlon.

The frame is usually defined by two suitably joined shells which enclose the foam inside it.

However, these rackets may have drawbacks in terms of strength or performance.

In particular, such rackets tend to respond with different mechanical behaviours depending on the zone where the ball strikes the racket. Consequently, the response of the racket to the impact with the ball is not always optimum in terms of both performance and comfort for the user. The Applicant has found, therefore, that these prior art rackets can be improved in terms of performance and mechanical behaviour.

Document _WO2023227819 discloses a padel racket which comprises a first polycarbonate half-case and a second polycarbonate half-case filled with at least one EVA or foam rubber core positioned in a striking area. The described racket comprises a first area corresponding to the handle and the bridge, a second zone corresponding to the perimeter of the head, and a third zone corresponding to the perimeter of the central core. These separate zones can be filled with polyurethane foams of different rigidities. This racket is neither durable nor easy to manufacture due to the multiple parts that need to be assembled within the half cases.

In this context, the technical purpose and the aim which forms the basis of the invention are to provide a reliable and easy to manufacture racket which has a better mechanical behaviour and has higher performance levels compared with prior art rackets, thus guaranteeing greater comfort for the user.

The technical purpose indicated and the aim specified are substantially achieved by a racket and a method for manufacturing a racket comprising the technical features described in the independent claims and/or in one or more of the dependent claims, respectively.

According to an aspect, the invention relates to a racket for ball sports, in particular for padel, pickleball or beach tennis.

The racket comprises a first half-shell comprising a first head portion having a first impact wall.

The first half-shell comprises a first handle portion which extends from the first head portion.

The first half-shell comprises a first contour wall which extends around the first head portion.

The racket comprises a second half-shell coupled to the first half-shell. The second half-shell comprises a second head portion which has a second impact wall.

The second half-shell comprises a second handle portion which extends from the second head portion.

The second half-shell comprises a second contour wall which extends around the second head portion.

The second contour wall is joined to the first contour wall.

The racket comprises a central core made of a first deformable material and positioned between the first and the second impact surfaces.

The racket comprises a peripheral core comprising a contour element located around the central core.

The peripheral core is positioned between the first and second impact surfaces in contact at least with the first and second contour walls.

The contour core is made of a second deformable material.

Advantageously, using a peripheral core allows the vibrations and contacts by the user to be improved.

The term "deformable material" means a material which has an elastic deformation at the end of which it returns to the initial shape, without residual deformations.

The peripheral core substantially defines a frame inside the racket. Advantageously, the peripheral core improves the mechanical strength of the racket.

Advantageously, the peripheral core applies a homogeneous distribution of force on the contour walls.

Advantageously, using a deformable material for the peripheral core makes it possible to guarantee good performance of the racket thanks to its elastic properties.

The central core and the peripheral core substantially define a block of deformable material having the geometry of the racket.

According to an aspect, the peripheral core has a variable density. According to an aspect, the first material is a foam.

Preferably, the central core is made of EVA (Ethylene Vinyl Acetate).

According to an aspect, the central core is therefore formed from a deformable material which is able to absorb impacts, for example made of expanded material, polyvinyl chloride (PVC) or polyether urethane (PU), rubber or latex.

According to an aspect, the first material is a non-expanding material preferably having a density of between 20 g/l and 300 g/l.

According to an aspect, the first material is an expanding material, preferably having a density of between 10 g/l and 150 g/l

According to an aspect, the first deformable material is an expanding material having a volumetric expansion factor of between 7 and 9.

According to an aspect, the second material is a foam.

According to an aspect, the second material is a non-expanding material.

According to an aspect, the second material is a non-expanding material preferably having a density of between 20 g/l and 300 g/l.

According to an aspect, the second material is an expanding material.

According to an aspect, the second material is an expanding material preferably having a density of between 10 g/l and 150 g/l.

According to an example, the second material is an expanding foam.

The term "expanding material" means a material which is able to increase its volume if heated.

For example, the second material may be Koridion.

According to an example, the second material is expanding foam having a density range of between 25 g/l and 80 g/l, which expands in a temperature range of between 50° and 140°.

It should be noted that in this description the temperatures are expressed in degrees Celsius.

Advantageously, making the peripheral core of expanding material guarantees a homogeneous compression on the contour walls and on the central core when the second material is heated.

This improves the mechanical features of the racket and its performance. Advantageously, the use of a peripheral core made of expanding material allows the vibrations and contacts by the user to be improved.

According to an aspect, the second deformable material is as expanding material having a volumetric expansion factor of between 7 and 9.

The second material may therefore be an expanding material which modifies its volume following a variation in temperature.

According to an example, the second material is a non-expanding foam having a density range of between 45 g/I- 200 g/l and which expands in a temperature range of between 50° and 140°.

If the second material is non-expanding, it is necessary to make a peripheral core slightly over-sized in order to guarantee a good mechanical compression on the contour walls.

According to an aspect, the peripheral core comprises a filling element made in the second material and positioned between the first handle portion and the second handle portion.

According to an aspect, the filling element and the contour element are made in a single body.

Preferably, the peripheral core is made as a single body following the shape of the half-shells by moulding, cutting or mechanical processing of the second material constituting the peripheral core.

According to an aspect, the first half-shell comprises a first portion for connection between the first head portion and the first handle portion.

According to an aspect, the second half-shell comprises a second connection portion between the second head portion and the second handle portion.

According to an aspect, the first and second connection portions have, respectively, a through opening.

Advantageously, the presence of a through opening reduces the friction of the racket during use.

According to an aspect, the peripheral core comprises a connection element made in the second material between the filling element and the contour element.

The connection element may be positioned between the first and the second connection portions.

The connection element is preferably made in a single body with the filling element and the contour element.

According to an aspect, the filling element has a first density and the contour element has a second density.

In other words, the density of the second deformable material varies between the contour element and the filling element even if they are made in a single body.

The contour element may comprise metallic inserts.

According to an example, heavier reinforcement fibres can be positioned at the first and second half-shells.

According to an aspect, the contour element has recesses.

According to an aspect, at the recesses, the contour element has an increase in density with respect to the rest of the contour element.

The density of the contour element may be increased at the recesses.

Advantageously, increasing the density at the recesses allows a better balancing of the racket to be achieved.

According to an example, the density of the contour element and/or of the filling element is between 200 g/l and 400 g/l.

In the context of this invention, these values are considered as high density values.

According to an example, the density of the contour element and/or of the filling element is 300 g/l.

According to an example, the density of the contour element and/or of the filling element is between 50 g/l and 150 g/l.

In the context of this invention, these values are considered as low density values.

According to an example, the density of the contour element and/or of the filling element is 100 g/l.

Advantageously, if the contour element has a greater density than the filling element, the head portion of the racket has a greater inertia and provides the racket with more power.

Advantageously, if the filling element has a greater density than the contour element, the racket is easier to handle.

According to an aspect, the first connection portion, the second connection portion and the connection element have, respectively, a through opening.

Advantageously, the presence of a through opening reduces the friction of the racket during use.

According to an aspect, the first half-shell and the second half-shell are made of composite material.

According to an example, the material of the first half-shell and of the second half-shell is selected amongst: a composite material, such as glass fibres impregnated in a polymer matrix, a thermoplastic or thermosetting material, such as polycarbonate or polyethylene.

According to an aspect of the invention, the invention relates to a method for manufacturing a racket for ball sports, in particular for padel, pickleball or beach tennis, according to any one of the above-mentioned aspects. The method comprises providing a first half-mould.

The method comprises laminating at least one layer of composite material in the first half-mould to define the first half-shell.

The method comprises providing a second half-mould.

The method comprises laminating at least one layer of composite material in the second half-mould to define the second half-shell.

The method comprises placing in the first half-shell, in a central portion of the first wall, the central core of first deformable material.

The method comprises placing in the first half-shell the peripheral core made in the second material.

The method comprises superposing the second half-mould on the first half-mould.

The method comprises coupling the first and the second half-moulds to obtain a casing defined by the first and by the second half-shell. According to an aspect, laminating at least one layer of composite material comprises treating the layer of composite material positioned in the half-moulds.

According to an aspect, coupling the first and the second half-moulds comprises vacuum placing the second half-mould superposed on the first half-mould.

Advantageously, the pressure difference given by the vacuum allows the layers of carbon to be adapted to the half-mould giving the half-shell the desired shape.

According to an aspect, the method comprises placing a layer of composite material on the peripheral core.

According to an aspect, the second material is an expanding material, the method comprising heating the casing to a temperature of between 30°-100°.

According to an aspect, the second material is a non-expanding material, the method comprising positioning a peripheral core having dimensions greater than an outer edge of the half-mould and compressing the peripheral core inside the half-mould.

According to an aspect, the method comprises inserting the central core of first material in the peripheral core made in the second material. Advantageously, the method claimed is particularly simple and fast, and allows the desired mechanical properties for the racket to be obtained. Advantageously, the method allows a racket to be obtained with improved vibration absorption properties and greater comfort for the user.

Further features of this invention are more apparent in the description below, with reference to a preferred, non-limiting, embodiment as illustrated in the accompanying drawings, in which:
- Figure 1 schematically illustrates a perspective view of a racket according to the invention;
- Figure 2 schematic illustrates a perspective view of a racket, with some portions cut away, according to the invention,
- Figures 3 and 4 schematically illustrate an exploded view of a racket according to the invention.

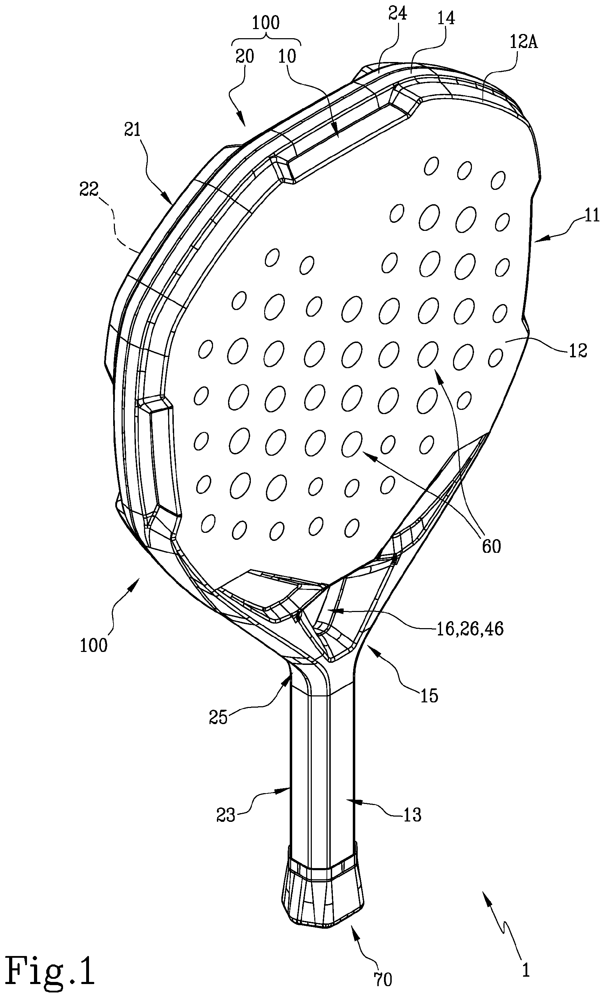

The numeral 1 in Figure 1 denotes a racket.

The racket 1 is preferably a racket for padel, pickleball or beach tennis. The racket 1 comprises a half-shell 10 and a half-shell 20.

Preferably, the half-shells 10, 20 are made of composite material. According to an embodiment, the half-shells 10, 20 are made of composite material, for example glass and/or carbon fibres pre-impregnated with a thermosetting resin such as an epoxy resin.

According to an embodiment, the shells 10, 20 comprise CFRP material having a basic weight of between 150 g and 300 g.

More specifically, the half-shells 10, 20 comprise at least a first and a second layer of impregnated and treated carbon.

The half-shells 10, 20 form a rigid outer frame for the racket 1.

The half-shell 10 comprises a head portion 11 having an impact wall 12.

The impact wall 12 has an edge 12A which extends around the head portion 11.

The half-shell 10 comprises a handle portion 13 which extends from the head portion 11 and a contour wall 14.

The contour wall 14 extends around the head portion 11.

More specifically, the contour wall 14 extends from the impact wall 12 at the edge 12A.

Preferably, the half-shell 10 comprises a connection portion 15 between the head portion 11 and the handle portion 13.

The connection portion 15 preferably has a respective through opening 16. The half-shell 20 comprises a head portion 21 having an impact wall 22.

The impact wall 22 has an edge 22A which extends around the head portion 21.

The half-shell 20 comprises a handle portion 23 which extends from the head portion 21 and a contour wall 24.

The contour wall 24 extends around the head portion 21.

More specifically, the contour wall 24 extends from the impact wall 22 at the edge 22A.

The half-shell 10 is joined to the half-shell 20 at the contour walls 14, 24. In other words, the contour wall 14 is joined to the contour wall 24.

Preferably, the half-shell 20 comprises a connection portion 25 between the head portion 21 and the handle portion 23.

The connection portion 25 preferably has a respective through opening 26. The racket 1 comprises a central core 30, made of a first material.

The first material is a deformable material.

The central core 30 is positioned between the impact surfaces 12, 22.

According to a preferred embodiment, the first material is a foam.

According to an embodiment, the first material is a non-expanding material preferably having a density of between 20 g/l and 300 g/l, preferably between 45 g/l and 200 g/l.

According to an embodiment, the first material is an expanding material. According to an embodiment, the first material is an expanding material preferably having a density of between 10 g/l and 150 g/l, preferably between 25 g/l and 80 g/l.

The first material with which the central core 30 is made is EVA.

The racket 1 comprises a peripheral core 40.

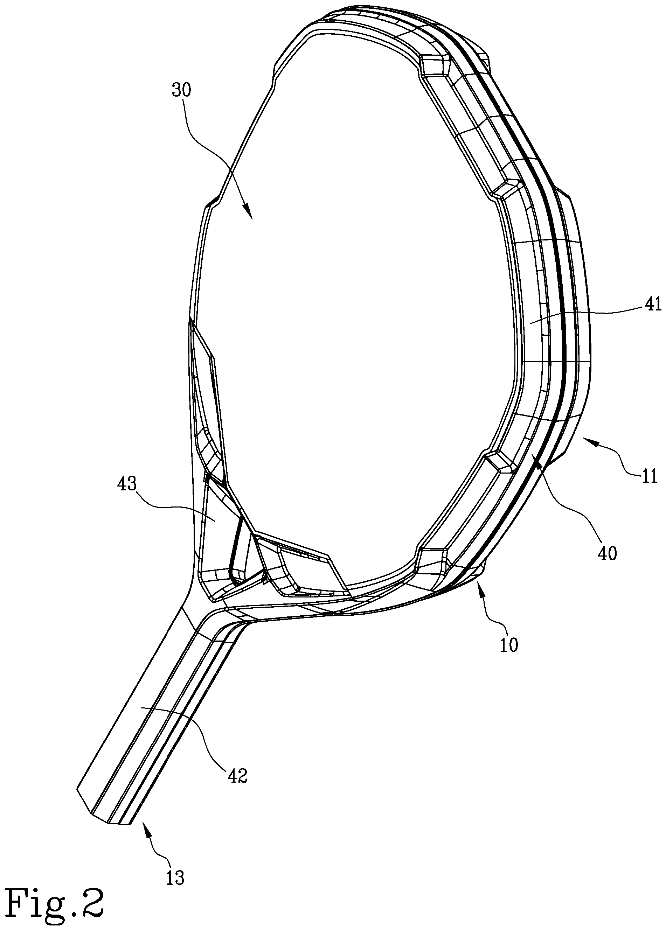

As illustrated in Figure 2, the peripheral core 40 is positioned around the central core 30.

The peripheral core 40 is positioned between the impact surfaces 12, 22. The peripheral core 40 comprises a contour element 41 that is arranged around the central core 30.

The contour element 41 is positioned between the impact surfaces 12, 22 in contact with the contour walls 14, 24.

The peripheral core 40 is made of a second deformable material.

According to an embodiment, the peripheral core 40 has a variable density, that is to say, the density is not constant along the peripheral core 40.

According to a preferred embodiment, the second material is a foam.

According to a preferred embodiment, the second material is Koridion, that is to say, a material having an ultralight structure expanding with heat.

According to an embodiment, the second material is a non-expanding material having preferably a density of between 20 g/l and 300 g/l, preferably between 45 g/l and 200 g/l.

According to an embodiment, the second material is an expanding material, preferably an expanding foam.

According to an embodiment, the second material is an expanding material preferably having a density of between 10 g/l and 150 g/l, preferably between 25 g/l and 80 g/l.

Preferably, the peripheral core 40 is made of an expanding material having a volumetric expansion factor of between 7 and 9, preferably equal to 8.5. According to a preferred embodiment, the central core 30 is made of EVA and the peripheral core 40 is made of an expanding material preferably having a volumetric expansion factor of between 7 and 9, preferably equal to 8.5.

More specifically, the expanding material of the peripheral core 40 preferably has a volumetric expansion factor equal to 8.5 at a pressure equal to 5.2 bar at 130°.

The second expanding material preferably has a compressive strength equal to 0.21.

The term "compressive strength" means the failure load of a predetermined sample, subjected to flattening.

According to and embodiment, the second material is an expanding foam having a density range of between 25g/l and 80 g/l and which expands in a temperature range of between 50° and 140°.

The peripheral core 40 comprises a filling element 42.

The filling element 42 is positioned between the handle portions 13, 23 of the two half-shells 10, 20.

The filling element 42 is made in the second material.

According to a preferred embodiment, the filling element 42 and the contour element 41 are made in a single body.

According to an embodiment, the density of the second deformable material varies between the contour element 41 and the filling element 42 even if they are made in a single body. In particular, the filling element 42 can have a first density whereas the contour element 41 has a second density. For instance, If the density is higher in the head portion 21, i.e. in the contour element 41, the head portion 21 has more inertia, which provides more power to the racket 1. In addition, if the density is higher in the handle portion 23, i.e. in filling element 42, the maneuverability, i.e. easiness to play, of the racket 1 is improved.

A lower density of the second material in the head portion 21 allows adding inserts, for instance metallic inserts, in this portion or using heavier, i.e. stronger, reinforcing fibers in the half shells 10 and 20 or in the central core 30, without unduly increasing the inertia of the head portion 21.

The density of the second deformable material may also vary within a part the peripheral core 40, for instance within the contour element 41. According to an embodiment, the contour element 41 comprises metal inserts.

According to an embodiment, the contour element 41 has recesses 45, defined at least on the lateral branches.

The density of the contour element 41 may be increased at the recesses 45, with respect to the rest of the contour element 41. This allows fine-tuning the technical features of the racket 1, such as its weight repartition, balance and moments of inertia.

According to an embodiment, the contour element 41 has three recesses 45 arranged in such a way that the contour element 41 is symmetrical about an axis of symmetry.

According to an embodiment, the density of the contour element 41 and/or of the filling element 42 is between 200 g/l and 400 g/l.

In the context of this invention, these values are considered as high density values.

According to a preferred embodiment, the density of the contour element 41 and/or of the filling element 42 is 300 g/l.

According to an embodiment, the density of the contour element 41 and/or of the filling element 42 is between 50g/l and 150 g/l.

In the context of this invention, these values are considered as low density values.

According to a preferred embodiment, the density of the contour element 41 and/or of the filling element 42 is 100 g/l.

The filling element 42 and the contour element 41 substantially define an internal frame for the racket 1.

According to an embodiment, the peripheral core 40 comprises a connection element 43.

The connection element 43 is positioned between the filling element 42 and the contour element 41.

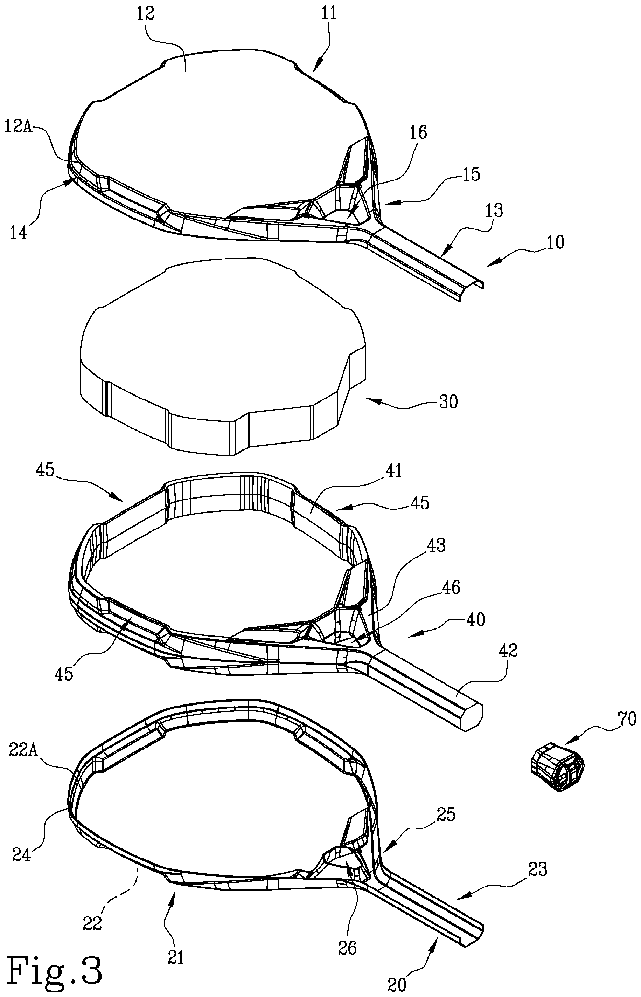

Preferably, the connection element 43 is made in the second material. Preferably, as illustrated in Figure 3, the connection element 43, the filling element 42 and the contour element 41 are made in a single piece.

The connection element 43 is positioned between the connection portions 15, 25 of the half-shells 10, 20.

The connection element 43 has a respective through opening 46.

The through openings 16, 26, 46 of the connection portions 15, 25 and of the connection element 43 substantially coincide.

The through openings 16, 26, 46 substantially have a triangular shape.

According to a preferred embodiment, the racket 1 has a plurality of through holes 60.

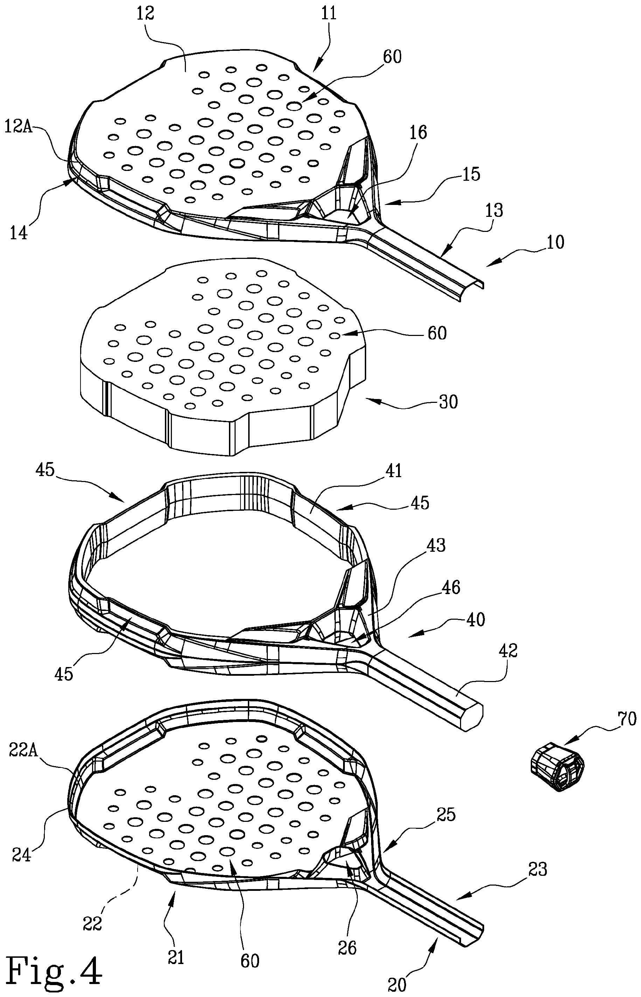

As illustrated in Figure 4, the holes 60 pass through the two half-shells 10, 20 and the central core 30.

The holes 60 are made preferably after assembling the racket 1.

The holes 60 are made at the head portions 11, 21.

According to an embodiment, the racket 1 comprises a cap 70.

The cap 70 is coupled to the casing 100 and in particular to the handle portions 13, 23 which it partly covers.

The invention relates to a method for making a racket for ball sports, in particular for padel or beach tennis, according to any of the above-mentioned features.

The method comprises:
- providing a first half-mould,
- laminating at least one layer of composite material in the first half-mould to define the half-shell 10,
- providing a second half-mould,
- laminating at least one layer of composite material in the second half-mould to define the half-shell 20.

Preferably, the method comprises laminating at least two layers of composite material in each half-mould to make each half-shell 10 and 20.

According to a preferred embodiment, the composite material comprises impregnated carbon fibres.

The method comprises placing the central core 30 of first deformable material in the half-shell 10, in a central portion of the impact wall 12.

According to an embodiment, the method comprises inserting the central core 30 of first material in the peripheral core 40 made in the second material.

According to a preferred embodiment, the method comprises placing in the half-shell 10 the peripheral core 40 made in the second material and then inserting inside the peripheral core 40 the central core 30.

As shown in Figure 4, the central core 30 is inserted inside the peripheral core 40 inside the half-shell 10.

The method comprises superposing the second half-mould on the first half-mould.

The method comprises coupling the first and the second half-moulds to obtain a casing 100, that is to say, a shell, defined by the two half-shells 10, 20.

According to an embodiment, coupling the first and the second half-moulds comprises vacuum placing the second half-mould superposed on the first half-mould.

According to a preferred embodiment, the method comprises placing a layer of composite material on the peripheral core 40 before coupling the two half-moulds.

In other words, strips of composite material are applied on the peripheral core 40 previously formed.

The method comprises moulding the peripheral core 40 in suitably shaped half-moulds.

According to an embodiment, the second material is an expanding material and the method comprises heating the casing 100 to a temperature of between 30° and 100°.

According to a preferred embodiment, the method comprises heating to a temperature of between 50 and 80° for a time of between 200 minutes and 1500 minutes.

## Claims

1. Racket for ball sports, in particular for padel, pickleball or beach tennis, comprising:
- a first half-shell (10) comprising a first head portion (11) presenting a first impact wall (12), said first half-shell (10) comprising a first handle portion (13) extending from the first head portion (10) and a first contour wall (14) developing around the first head portion (11),
- a second half-shell (20), coupled to the first half-shell (10), comprising a second head portion (21) presenting a second impact wall (22), said second half-shell (20) comprising a second handle portion (23) extending from the second head portion (21) and a second contour wall (24) developing around the second head portion (21), the second contour wall (24) being joined to the first contour wall (14),
- a central core (30), made of a first deformable material and arranged between the first and second impact surfaces (12,22),
- a peripheral core (40) comprising a contour element (41) arranged around the central core (30), the peripheral core (40) being arranged between the first and second impact surfaces (12,22) in contact with at least the first and second contour walls (14,24) and made of a second deformable material, the peripheral core (40) comprising a filling element (42) made of the second deformable material and disposed between the first handle portion (13) and the second handle portion (23), the filling element (42) and contour element (41) being made in a single body.

2. Racket according to claim 1, wherein the first and/or second deformable material is a foam.

3. Racket according to claim 1 or 2, wherein the first and/or second deformable material is an expanding material, preferably having a density between 10 g/l and 150 g/l.

4. Racket according to claim 3, wherein the first and/or second deformable material is an expanding material presenting a volumetric expansion factor between 7 and 9.

5. Racket according to claim 1 or 2, wherein the first and/or second deformable material is a non-expanding material, preferably having a density between 20 g/l and 300 g/l.

6. Racket according to any of the preceding claims, wherein the filling element (42) has a first density and the contour element (41) has a second density.

7. Racket according to any of the preceding claims, wherein the contour element (41) has recesses (45) and the density of the contour element (41) is increased at the recesses (45), with respect to the rest of the contour element (41).

8. Racket according to any of the preceding claims, wherein the first half-shell (10) comprises a first connection portion (15) between the first head portion (11) and the first handle portion (13) and the second half-shell (20) comprises a second connection portion (25) between the second head portion (21) and the second handle portion (23).

9. Racket according to claim 8, wherein the peripheral core comprises a connection element (43) made in the second deformable material between the filling element (42) and the contour element (41),
the connecting element being arranged between the first and second portions of the connection (15,25),
the connection element (43) being preferably made in a single body with the filling element (42) and the contour element (41).

10. Racket according to claim 9, in which the first connection portion (15), the second connection portion (25) and the connection element (43) respectively present a through opening (16,26,46).

11. Racket according to any of the preceding claims, wherein the first half shell (10) and the second half shell (20) are made of composite material.

12. A method for manufacturing a racket according to any one of the preceding claims, the method comprising:
- providing a first half-mould,
- laminating at least one layer of composite material in the first half-mold to define the first half-shell (10),
- providing a second half-mould,
- laminating at least one layer of composite material in the second half-mold to define the second half-shell (20),
- arranging in the first half-shell (10), in a central portion of the first impact wall (12), the core (30) of the first deformable material,
- arranging in the first half -shell (10) the peripheral core (40) comprising the contour element (41) and the filling element (42) made of the second deformable material,
- overlaying the second half-mold onto the first half-mold,
- coupling the first and second half-mold to obtain a casing (100) defined by the first and second half-shell (10, 20).

13. Method according to claim 12, wherein coupling the first and second half-molds comprises vacuum placing the second half-mould superimposed on the first half-mold.

14. Method according to claim 12 or 13, comprising laying a layer of composite material on the peripheral core (40).

15. Method according to any of claims 12 to 14, wherein the second deformable material is an expanding material, the method comprising a heating the single body to a temperature between 30°-100°.

16. Method according to any of claims 12 to 15, comprising inserting the core (30) of first deformable material into the peripheral core (40) made of the second deformable material.
